# EUROPÄISCHE PATENTANMELDUNG

(11) **EP 3 972 138 A1**
(43) Veröffentlichungstag der Anmeldung: **23.03.2022**
(21) Anmeldenummer: 21197924.0
(22) Anmeldetag: 21.09.2021
(51) Int. Cl.: H04B 1/38, H04W 88/08, H04W 84/00, F21S 8/08

(54) **STRASSENLEUCHTE MIT EDGE-COMPUTING-EINRICHTUNG**

(30) Priorität: 21.09.2020 DE 102020124557
(71) Anmelder: Siteco GmbH, 83301 Traunreut (DE)
(72) Erfinder: Cantignon, Jörg, 97440 Schleerieth (DE); Weber, Matthias, 83413 Fridolfing (DE)
(74) Vertreter: Schmidt, Steffen

(57) **Zusammenfassung**

Die Erfindung betrifft eine Straßenleuchte, die Folgendes aufweist: einen Leuchtenmast, einen Leuchtenkopf, der ein Leuchtmittel der Straßenleuchte aufweist, Kernkomponenten, wenigstens eine Schnittstelle und wenigstens einer Antenne einer Edge-Computing-Einrichtung und ein Ausrüstungsset, welches an dem Leuchtenmast und/oder an dem Leuchtenkopf installiert ist, wobei das Ausrüstungsset einen Geräteraum aufweist, in welchem wenigstens eine Antenne der Edge-Computing-Einrichtung angeordnet ist.

## Beschreibung

Die vorliegende Erfindung betrifft eine Straßenleuchte mit integrierten Kernkomponenten, einer Schnittstelle und wenigstens einer Antenne einer Edge-Computing-Einrichtung und insbesondere eine Straßenleuchte mit einem Ausrüstungsset, in welchem die Antenne der Edge-Computing-Einrichtung angeordnet ist.

Der Begriff Edge Computing leitet sich daraus ab, dass Datenverarbeitung nicht auf zentralen Einrichtung wie z.B. Server-Back-End-Systemen stattfindet sondern ausgelagert wird an den Rand vom Internet, also dort, wo beispielsweise mobile Endgeräte, Personen und Anwendungen Daten erzeugen und verarbeiten. Im Weiteren wird für den Begriff Edge Computing die Abkürzung EC verwendet.

EC bietet die Möglichkeit, hohes Datenaufkommen am Ort der Datenerfassung nahezu unmittelbar vor Ort zu verarbeiten und daraus folgenden Reaktionen zu erzeugen. Diese Reaktionen wirken latenzarm in der unmittelbaren Umgebung des Datenerfassungsortes. Somit erfordert EC das Vorhandensein von Rechenleistung, latenzarmer Kommunikation und Datenspeicher in unmittelbarer Umgebung des Datenerfassungs- und Verarbeitungsortes. Geräte, die EC-Dienste nutzen, werden hinsichtlich dieser Anforderungen entlastet und können somit ressourcenschonend gestaltet werden. Weiterhin werden diejenigen technischen Einrichtungen hinsichtlich Datenaufkommen und Rechenleistung entlastet, denen zentrale Rollen im Internet zukommen wie z.B. die zuvor genannten Server-Back-End-Systeme und deren Kommunikationseinrichtungen untereinander.

Gegenüber zentral organisierten Systemen wie z.B. internetbasierende Server-Back-End-Systeme kann beim EC vermieden werden, dass sensible Daten vom Ort der Datenerfassung weg bzw. zum Ort Datenverarbeitung hin übertragen werden müssen. Der EC-Ansatz gestattet durch seine immanente Möglichkeit der lokalen Anonymisierung von Daten hinsichtlich Datenschutz eine robustere Systemarchitektur.

Nach dem Stand der Technik werden Einrichtungen für EC mit Schellen und Haltern an Masten angebracht, an Fassaden oder auf/unter Dächern aufgestellt. Auch werden Verkehrsleitanlagen, Stadtmöbel, Bodentanks und Schaltschränke genutzt. Dabei bieten diese Unterbringungsmöglichkeiten nicht die erforderliche Anzahl bzw. Verteilungsdichte für bestimmte Anwendungsgebiete. Zudem gehören die notwendigen Standorte einer Vielzahl von Eigentümern und führen zu einer hohen Anzahl an Vertragsverhandlungen und Zahlungen für Zugangs- bzw. Nutzungsrechte.

Es ist daher die Aufgabe der vorliegenden Erfindung eine alternative kostengünstige Variante zum Installieren von Edge-Computing-Einrichtungen zu finden.

Gelöst wird die Aufgabe durch eine Straßenleuchte nach Anspruch 1 und ein System nach Anspruch 14.

Erfindungsgemäß ist vorgesehen, die Kernkomponenten einer Edge-Computing-Einrichtung in einer Straßenleuchte zu integrieren. Dies bietet mehrere Vorteile. Viele Anwendungsgebiete, in denen EC zum Einsatz kommt, finden auf Straßen im öffentlichen bzw. privaten Raum oder in deren Umfeld statt. Zu diesen Anwendungsgebieten zählen die Straßen-und Außenbeleuchtung selbst, vernetzter Fahrzeugverkehr, autonomes Fahren, Veranstaltungen wie z.B. Stadtmarathons oder Radrennen mit Tracking der Teilnehmer, Systeme für Sicherheitsinformationen, Verkehrslenkung, Verkehrsinformation, Verarbeitung von Sensordaten aus der Umwelt der EC Einrichtungen, personifizierte bzw. lokale begrenzte dynamische Werbung. Straßenleuchten sind im öffentlichen Verkehrsraum ohnehin vorhanden und weisen eine direkte räumliche Nähe zu Verkehrswegen auf, die für Abdeckung von Edge-Computing-Einrichtungen bevorzugt sind. Die Lage der Straßenleuchten direkt an den Verkehrswegen ermöglicht es daher, auf direktem Wege die dezentrale Bearbeitung von z. B. Fahrzeugdaten, z.B. Daten zum autonomen Fahren oder Navigationsdaten, durchzuführen. Ferner bieten die Straßenleuchten den Vorteil, dass vorhandene Installation der Straßenleuchte, insbesondere die Stromversorgung sowie ggf. die Datenvernetzung der Straßenleuchten untereinander, auch für die Edge-Computing-Einrichtungen benutzt werden kann. Die Installation im Vergleich zur Installation an festen Gebäuden ist daher einfacher durchzuführen, zumal die Straßenleuchten in der Regel in Besitz der öffentlichen Hand sind, so dass auch rechtlich keine Erlaubnis von Anwohnern von Gebäuden einzuholen ist, um derartige Geräte zu installieren. Ferner zählen zu den Anwendungsgebieten des Edge-Computing auch die Steuerung von Straßen- und Außenbeleuchtung selbst, sowie vernetzter Fahrzeugverkehr, und Veranstaltungen, wie z.B. Sportveranstaltungen (Radrennen etc.) auf den Verkehrswegen. Die Anordnung der Edge-Computing-Einrichtungen direkt an den Verkehrswegen ist daher von besonderem Vorteil im Vergleich zu anderen Standorten.

Gemäß einer bevorzugten Ausführungsform weist der Geräteraum eine Außenwand auf, die sich über 360° um den Leuchtenmast und/oder den Leuchtenkopf erstreckt, und die Außenwand ist für elektromagnetische Strahlung transparent. Dadurch können die Antennen alle Raumwinkel um die Straßenleuchte abdecken.

Gemäß einer bevorzugten Ausführungsform ist das Ausrüstungsset an die Geometrie einer Außenkontur des Leuchtenmasts und/oder des Leuchtenkopfs angepasst. Beispielsweise kann das Ausrüstungsset den gleichen Umfang wie der Leuchtmast oder der Leuchtenkopf aufweisen. Vorzugsweise schließt die gleiche Geometrie das Ausrüstungsset ohne Stufe an dem entsprechenden Bauteil des Leuchtenmasts oder des Leuchtenkopfs an, so dass sich in diesem Bereich kein Schmutz oder Schnee ansammeln kann, welcher nicht nur das Aussehen der Leuchte negativ beeinflussen würde sondern, insbesondere bei Schnee, auch eine Abschirmung der Antennen zur Folge hätte.

Gemäß einer bevorzugten Ausführungsform ist das Ausrüstungsset als Mastmanschette um den Leuchtenmast ausgebildet. Eine Mastmanschette lässt sich besonders einfach an einer bereits vorhandenen Straßenleuchte nachrüsten und weist den Vorteil auf, dass sie um den gesamten Umfang des Leuchtenmasts Außenwände aufweist, durch welche die Antennen im Inneren des Geräteraums in alle Raumwinkel senden und empfangen können.

Gemäß einer bevorzugten Ausführungsform ist das Ausrüstungsset als Zwischenstück des Leuchtenmasts ausgebildet und insbesondere zwischen einem Ende des Leuchtenmasts und einem Ende des Leuchtenkopfs angeordnet. Beispielsweise kann das Mastzwischenstück die gleiche Umfangsform aufweisen wie der Leuchtenmast. Das Mastzwischenstück kann auch als kontinuierliches Verbindungselement zwischen dem Leuchtenmast und dem Leuchtenkopf, fachsprachlich auch als "Leuchte" bezeichnet, mit unterschiedlichen Durchmessern ausgebildet sein. Auch das Mastzwischenstück kann nachträglich an einer Straßenleuchte montiert werden. Dazu ist insbesondere vorgesehen, dass das Mastzwischenstück auf der zum Leuchtenmast weisenden Seite eine Aufnahme für den Leuchtenmast und auf der zum Leuchtenkopf weisenden Seiten eine entsprechende Aufnahme aufweist, auf die eine Mastaufnahme des Leuchtenkopfs montiert werden kann. Dadurch kann das Mastzwischenstück einfach zwischen einen Leuchtenmast und einen Leuchtenkopf nachträglich montiert werden, indem der Leuchtenkopf von dem Leuchtenmast abgenommen wird und auf das Zwischenstück wieder aufgesetzt wird.

Gemäß einer bevorzugten Ausführungsform ist das Ausrüstungsset als Aufsatz auf den Leuchtenkopf ausgebildet. Der Aufsatz kann beispielsweise auf dem Leuchtenkopf an der dem Leuchtenmast gegenüberliegenden Seite montiert werden. Dies ist baulich sehr einfach, weil dazu der Leuchtenkopf von dem Leuchtenmast nicht getrennt werden muss und die Höhe des Leuchtenkopfs erhalten bleibt. Ferner bietet auch diese Position die Möglichkeit, dass alle Raumwinkel um die Leuchte von den Antennen im Geräteraum des Ausrüstungssets abgedeckt werden können.

Gemäß einer bevorzugten Ausführungsform ist das Ausrüstungsset als Einschub in den Leuchtenmast oder den Leuchtenkopf ausgebildet. In dieser Ausführungsform ist das Ausrüstungsset in den Leuchtenkopf bzw. in den Leuchtenmast vollständig integriert. Diese Ausführungsform ist bevorzugt, wenn das Material des Leuchtenmasts bzw. das Material des Leuchtenkopfs für elektromagnetische Strahlung durchlässig ist. Bei einem Leuchtenmast aus Metall kann auch vorgesehen sein, dass die Antenne in einer separaten strahlungsdurchlässigen Manschette vorgesehen ist, die vorzugsweise den gleichen Umfang wie der Leuchtenmast hat.

Gemäß einer bevorzugten Ausführungsform umfasst die wenigstens eine Antenne mehrere Flächen- und/oder Folienantennen, die innen liegend an einer Außenwanne des Geräteraums entlang des Umfangs des Leuchtenmasts und/oder des Leuchtenkopfs angeordnet sind. Die mehreren Antennen können insbesondere den gesamten Raumwinkelbereich von 360° um die Leuchte abdecken.

Gemäß einer bevorzugten Ausführungsform ist das Ausrüstungsset in einer Höhe zwischen drei und zwölf Meter, insbesondere zwischen drei und fünf Meter, über dem Boden an dem Leuchtenmast und/oder dem Leuchtenkopf angebracht. Diese Höhe, die der üblichen Höhe einer Straßenleuchte entspricht, ist für die Anordnung der Antennen einer Basisstation nach dem 5G-Standard besonders geeignet.

Gemäß einer bevorzugten Ausführungsform weist die Straßenleuchte ferner einen Bodentank oder einen bodennahen Schaltschrank auf, in welchem Komponenten der EC-Einrichtung angeordnet sind. In dem Bodentank bzw. den Schaltschrank können Kernkomponenten der EC-Einrichtung, insbesondere Rechnereinrichtungen untergebracht werden, welche über eine Schnittstelle mit der Antenne in dem Geräteraum und über wenigstens eine weitere Schnittstelle mit einem Netz weiterer Rechnereinrichtungen, die verteilte Rechenleistungen bereitstellen, zusammenwirken. Dadurch lässt sich platzsparend die Installation der EC-Einrichtung an der Leuchte unterbringen. In anderen Ausführungsformen kann der Schaltschrank auch separat von der Straßenleuchte angeordnet sein. Das Ausrüstungsset im oberen Bereich der Leuchte kann baulich klein ausgeführt werden, weil lediglich die wenigstens eine Antenne darin unterzubringen ist.

Gemäß einer bevorzugten Ausführungsform sind in dem Ausrüstungsset Komponenten für eine optische Kommunikation, Virtual Light Communication, VLC, angeordnet. Dazu kann ein optisches Fenster, z.B. in Form einer Linse, in dem Ausrüstungsset vorgesehen sein, so dass die optische Kommunikation durch dieses Fenster erfolgt.

Gemäß einer bevorzugten Ausführungsform weist das Ausrüstungsset Außenwände auf, die den Geräteraum gegen Staub, Stöße, Feuchtigkeit, Wind und/oder UV-Strahlung schützen, insbesondere einen Schutz nach IP44 oder höher gewährleisten. Eine Außenwand, welche der Schutzklasse genügt, lässt sich kostengünstig aus Kunststoff fertigen, so dass die Außenwand auch für elektromagnetische Strahlung durchlässig ist.

Gemäß einer bevorzugten Ausführungsform weist das Ausrüstungsset eine Außenwand auf, die aus mehreren, vorzugsweise gleich geformten, Schalenelementen besteht, welche den Geräteraum nach außen umschließen. Die immer gleich geformten Schalenelemente lassen sich besonders einfach herstellen und sind auch bei der Montage besonders einfach zu handhaben.

Ferner stellt die Erfindung ein System bereit, wobei das System mehrere Straßenleuchten aufweist, wobei wenigstens eine Straßenleuchte nach einer der vorhergehenden Ausführungsformen ausgeführt ist, und die Straßenleuchten jeweils Komponenten von Edge-Computing-Einrichtungen aufweisen, wobei die Straßenleuchten über ein Datennetzwerk miteinander verbunden sind und in Verbindung miteinander Rechenleistung für Edge-Computing bereitstellen. Auf diese Weise lassen sich über ein System mehrere Rechner im Verbund Edge-Computing-Dienstleistungen bereitstellen. Dabei ist zu beachten, dass diese Rechnerleistung immer noch lokal zur Verfügung steht im Unterschied zu einem Cloud-basierten System, welches auf einem virtuellen Rechenzentrum die Rechenleistung bereitstellt. Das Netzwerk der Edge-Computing-Einrichtungen kann jedoch auch in Verbindung mit einem Cloud-basierten Netzwerk über Schnittstellen in wenigstens einer der Straßenleuchten stehen. Dabei ist von Vorteil, dass durch das Edge-Computing lokal in den Straßenleuchten bereits Datenverarbeitung der lokal eingehenden Daten erfolgen kann, so dass die Datenkommunikation zum Cloud-basierten Rechensystem reduziert werden im Vergleich zu herkömmlichen Systemen, bei denen die Datenverarbeitung vollständig in dem Cloud-basierten System stattfindet.

Weitere Vorteile und Merkmale der vorliegenden Erfindung werden aus der nachfolgenden Beschreibung deutlich, die in Verbindung mit den Figuren gegeben wird. In den Figuren ist Folgendes dargestellt:
- Figur 1: zeigt ein manschettenförmiges Ausrüstungsset für Straßenleuchten.
- Figur 2: zeigt eine Aufsicht auf das Ausführungsset nach Anspruch 1 von oben.
- Figur 3: zeigt eine Aufsicht auf das Ausführungsset nach Figur 1 von unten.
- Figur 4: zeigt eine Straßenleuchte mit einem manschettenförmigen Ausrüstungsset nach Figur 1.

- Figur 5: zeigt ein Ausrüstungsset für eine Straßenleuchte in Form eines Leuchtenaufsatzes.
- Figur 6: zeigt das Ausrüstungsset nach Figur 5 in einer Aufsicht von oben und von unten.
- Figur 7: zeigt einen Leuchtenkopf einer Straßenleuchte mit dem Ausrüstungsset nach Figur 5.
- Figur 8: zeigt zwei Leuchtenköpfe mit einem darin integrierten Ausrüstungsset.
- Figur 9: zeigt ein Ausrüstungsset in Form eines Mastzwischenstücks.
- Figur 10: zeigt eine Straßenleuchte mit einem Ausrüstungsset in Form eines Mastzwischenstücks nach Fig. 9.
- Figur 11: zeigt ein System aus mehreren miteinander vernetzten Straßenleuchten mit EC-Einrichtungen.
- Figur 12: zeigt eine Variante des Systems nach Figur 11, wobei Teile der EC-Einrichtungen der Straßenleuchten in Bodentanks untergebracht sind.

Die Ausführungsformen der vorliegenden Erfindung sehen eine Straßenleuchte vor, in der eine Einrichtung für Edge-Computing einschließlich der Antenne für die Funkschnittstelle integriert ist.

Erfindungsgemäß sind die Kernkomponenten, Peripheriegeräte, Antennen und andere Schnittstellenkomponenten des EC in der Straßenleuchte integriert. Bei den integrativen Ausrüstungssets handelt sich um für Masten und Leuchten passgenau entwickelte Gehäuse mit Geräteträger zur schnellen, verdeckten und einfachen Anbringung der EC Technologie an/um den herkömmlichen Masten oder Leuchten: Mastmanschetten, Leuchtenaufsatz-Gehäuse, Leuchtenintegrations-Gehäuse und Maststück-Gehäuse. Die Gehäusematerialien sind durchlässig für die Signale bzw. Signalträger des jeweiligen Anwendungsgebietes. Im Stand der Technik entstehende Signal-oder Funkabschattungen durch Mast, Befestigungswand oder anderes Befestigungsmaterial werden vermieden. Die Anbringung erfolgt an oder unterhalb der Leuchten, deren Lichtpunkthöhe in europäischen Siedlungsgebieten vier bis zwölf Meter über dem Boden beträgt. Diese Anbringungshöhe gestattet ausreichenden Sicherheits-abstand bezüglich Beschädigungen aus dem Umfeld, weitestgehend freie Sicht auf das Umfeld, wenig Abschattung durch Passanten, Fahrzeuge und andere bewegliche Objekte des Umfeld.

Die EC-Einrichtungen werden durch das elektrische Versorgungsnetz der Straßenleuchten versorgt. Für den Fall erweiterten Bedarfs an Rechenleistung, Speicherleistung, Schnittstellen sind zusätzliche Bodentanks vorgesehen. Zusätzlich sieht die Erfindung eine Integration von Anlagen zur optischen Kommunikation (Visual Light Communication - VLC) vor, die eine kostengünstige breitbandige Datenanbindung ohne Leitungen ermöglicht. Diese optischen Kommunikationsanlagen wirken durch einen optischen Durchlass durch das Gehäuse nach außen und erlauben dadurch den Datenaustausch mit benachbarten Leuchtenstandorten.

Das Gehäuse bietet dem Inhalt Schlag- und IP-Schutz (Ingress-Protection) vor z.B. Staub, Stößen, Feuchtigkeit, Wind und UV-Strahlung. Dadurch ist insbesondere ein Schutz vor Wind- und Wettereinflüssen, vor Beschädigung, Tieren oder auch ein Sichtschutz gegeben. Anders als andere Lösungen, die den Austausch des Masts oder der Leuchte versehen, nutzt die Erfindung herkömmliche Masten und Leuchten und ermöglicht dadurch einen minimalinvasiven Eingriff in die bestehende Beleuchtungsinfrastruktur und das Straßenbild. Konstruktive Gestaltung des Übergangs zwischen Mast und Leuchte ermöglichen, dass Mast/Leuchte und Mobilfunk-Basisstation als optische Gesamteinheit wahrgenommen werden. Im Gegensatz zur Anbringung herkömmlicher Geräte mit Mastschellen, passt sich die Erfindung der bestehenden Leuchte stärker an und vermeidet Vogelnistplätze, grobe optische Störungen des Straßenbildes und Funkschatten durch den Mast. Das Gehäuse mit der integrierten EC-Technologie, den Peripheriegeräten und den Gehäusearretierung dient der einfachen und schnellen Montage und Wartung der enthaltenen Komponenten.

Die Ausrüstungssets können unterschiedliche Formen annehmen.

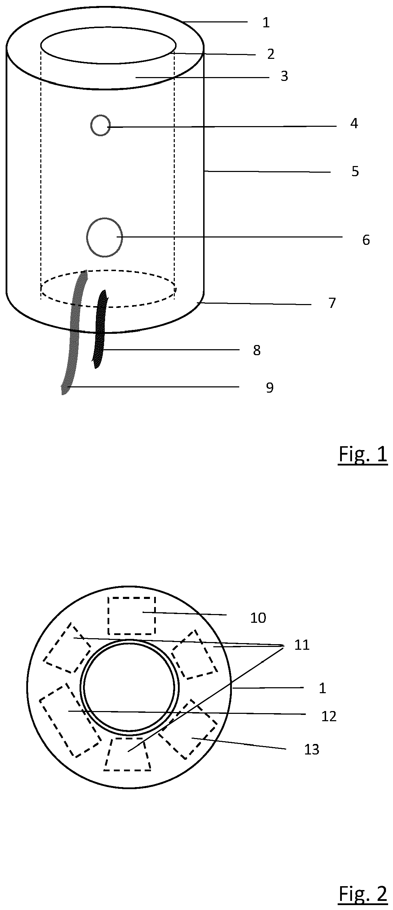

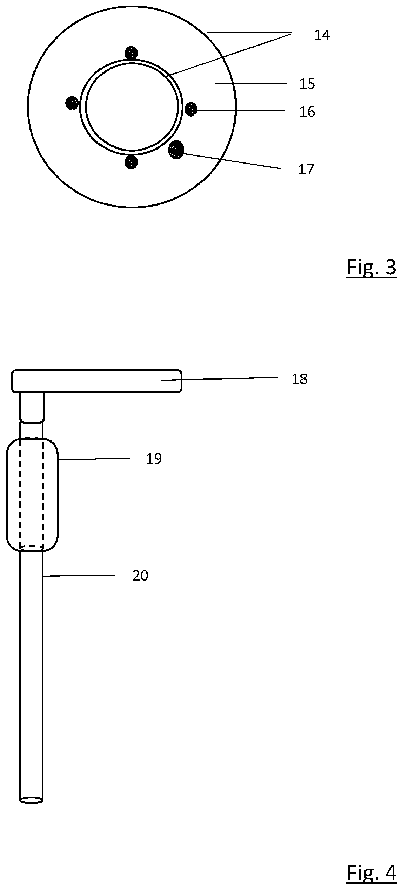

In der Ausführungsform nach Figuren 1 bis 4 ist ein manschettenförmiges Ausrüstungsset dargestellt, das außen über bestehende Maste gestülpt und dort z.B. mit einer Befestigungsschraube am Mast arretiert wird. Zuleitungen für die Elektro- und Datenanbindung lassen sich am Mast außen oder durch eine Bohrung innen im Mast führen. Für dünnere oder für konische Masten kann der vorgesehene Innendurchmesser der Manschette durch Reduzierstücke verringert werden.

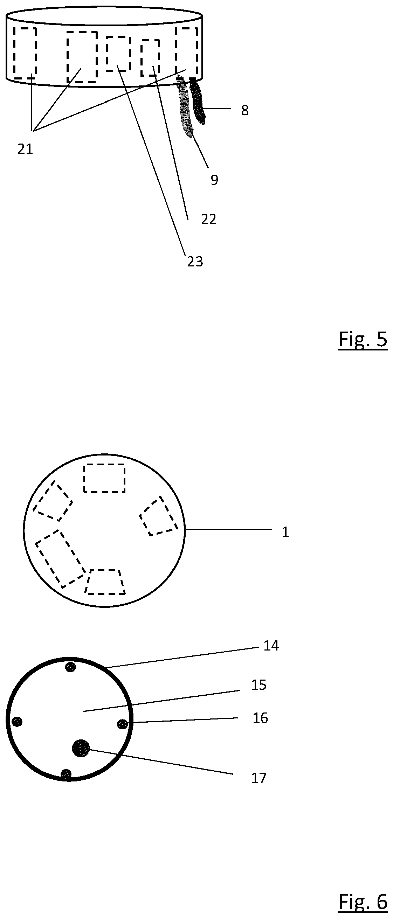

In den Figuren 5 bis 7 ist ein Ausführungsset dargestellt, welches als Aufsatz zum Aufsetzen auf eine Vielzahl verschiedener Leuchtenköpfe bestimmt ist. Das Ausrüstungsset wird auf die Oberseite der Leuchte aufgesetzt, so dass optisch eine Einheit mit dem Leuchtenkopf entsteht. Zuleitungen für die Elektro- und Datenanbindung werden außen an der Leuchte oder durch eine Bohrung innerhalb der Leuchte und/oder des Masts geführt.

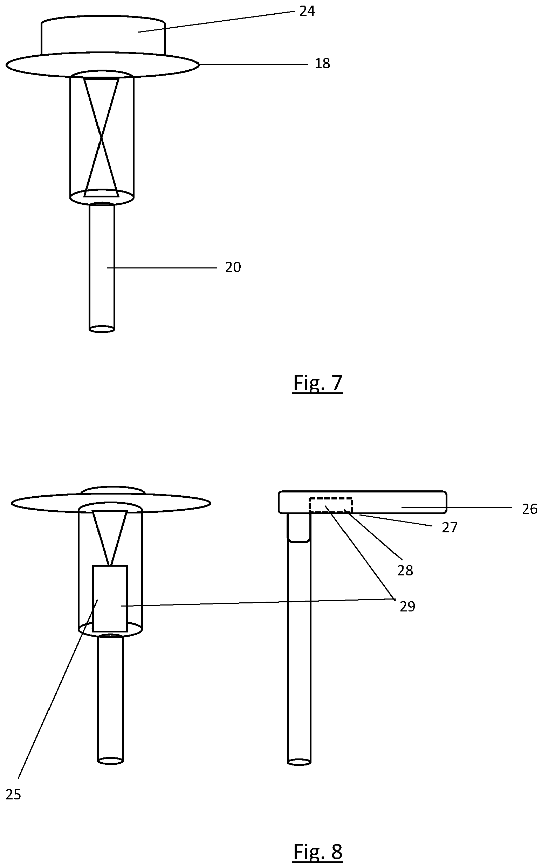

Gemäß anderen Ausführungsformen von integrierten Ausrüstungssets, welche in Figur 8 dargestellt sind, kann das Ausführungsset auch in den Leuchtenkopf integriert sein. Die Art der Anbringung ermöglicht eine Ausstrahlung und -empfang der Funkwellen durch das Glaselement des Leuchtenkopfs. Hierfür werden Flächen- bzw. Folienantennen hinter bzw. auf das Glas aufgebracht. Die Ausrüstungssets werden dabei neben dem Leuchtmittel angeordnet, so dass es den Lichtaustritt der Lichtquelle nicht behindert.

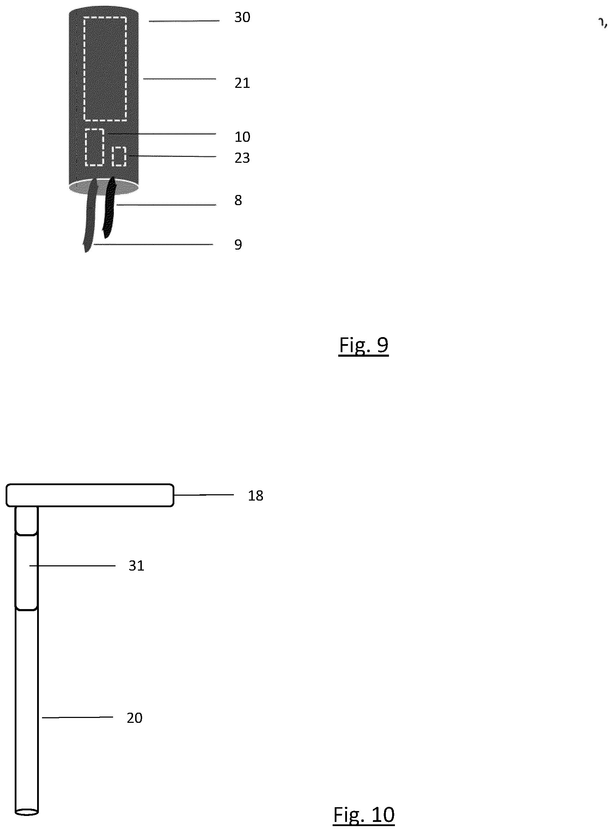

Schließlich ist in einer Ausführungsform auch ein Ausführungsset in Form eines Mastzwischenstückes vorgesehen, wie in Figur 9 und 10 dargestellt. Das Maststück integriert die Komponenten der EC-Einrichtung, insbesondere eine Antenne, in ein Rohrstück aus verstärktem Kunststoff. Es weist am unteren Ende eine Muffe auf, mit dem das Ausrüstungsset auf den bestehenden Mast aufsetzen lässt. Am oberen Ende des Maststücks wird der Leuchtenkopf aufgesetzt. Für dünnere Masten kann der vorgesehene Innendurchmesser des Mastzwischenstücks durch Reduzierstücke verringert werden. Zuleitungen für die Elektro- und Datenanbindung erfolgen innerhalb des Maststücks und weiter im Mast in den Boden.

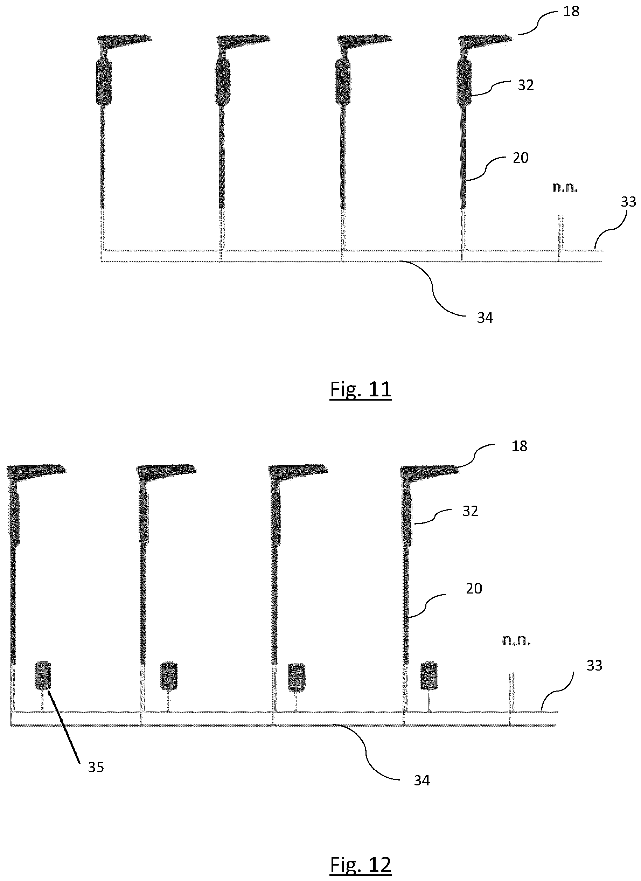

Die Straßenleuchten mit integrierten EC-Einrichtungen werden insbesondere in einem Kommunikationsnetzwerk im Verbund vorgesehen. Solche Netzwerke sind in den Figuren 11 und 12 dargestellt. Gemäß der Ausführungsform in Figur 11 sind mehrere Leuchten mit einem Ausrüstungsset über ein gemeinsames Stromnetz sowie über ein Kommunikationsnetz miteinander verbunden. Das Kommunikationsnetz dient insbesondere nicht nur der Steuerung der Leuchte, sondern außerdem der Datenübertragung zwischen den EC-Einrichtungen, die in den einzelnen Leuchten vorgesehen sind. Ferner ist auch eine Schnittstelle des Kommunikationsnetzes vorgesehen, die eine Verbindung an ein Cloud-basiertes Netzwerk ermöglicht.

Die Figur 12 ist eine Variante des Systems nach Anspruch 11, in welchem Komponenten des Edge-Computing in jeweils einem Bodentank vorgesehen sind. Die Bodentanks sind räumlich nahe den Leuchten angeordnet. Es können anstelle der Bodentanks auch Schaltschränke an den Leuchtenmasten der Leuchten vorgesehen sein. In diesen Ausführungsformen müssen nicht alle Komponenten der integrierten EC-Einrichtungen der Leuchten in den Ausrüstungsset selbst enthalten sein. Wesentliche Kernkomponenten der EC-Einrichtung, insbesondere Rechnereinrichtungen, können in dem Bodentank bzw. Schaltschrank vorgesehen sein, so dass die Ausrüstungssets baulich kleiner ausgeführt werden können.

### Bezugszeichenliste

- 1: Kunststoff-Gehäuse, oben und unten gewölbt
- 2: Innendurchmesser
- 3: Für die EC-Komponenten zur Verfügung stehender Innenraum
- 4: Arretierschraube für Befestigung an Mast
- 5: Kunststoff-Gehäuse
- 6: Linse für optische Kommunikation mit benachbarten Geräten (Visual Light Communication)
- 7: Abtropflippe, Wartungs-Öffnung am Boden mit Schraubverschluss. Boden aus Metall zur Befestigung der Geräteträger
- 8: Elektro-Leitungen (L, N, PE)
- 9: Daten-/Glasfaseranschluss
- 10: Rechen-/Speichereinheit
- 11: Sektor-Antennen
- 12: elektrischer Anschluss, Überspannungsschutz, Sicherungen
- 13: Stromzähler (optional)
- 14: Kunststoff-Gehäuse mit Abtropflippe und Dichtungen
- 15: Stabiler Boden für die Anbringung der Geräte
- 16: Verschraubungen für die Befestigung der Bodenplatte an der Manschette und die Anbringung des Reduzierstücks
- 17: Leitungsdurchführung
- 18: Leuchte
- 19: Sende-/Empfangseinheit in Manschettenform
- 20: Leuchtenmast
- 21: Antenne(n)
- 22: Server/Radio-Technologie
- 23: elektrischer Anschluss, Überspannungsschutz, Sicherungen, Stromzähler
- 24: Sende-/Empfangseinheit in Form eines Aufsatzes für Leuchten
- 25: Antenne innen an der Außenwand des Ausrüstungssets
- 26: Lampe/LED-Modul
- 27: Glasabdeckung
- 28: Antenne innen hinter dem Glas, wahlweise als Folienantenne
- 29: Ausrüstungsset eingebaut in Leuchte
- 30: Leuchtenmast-Stück zum Aufsetzen auf Leuchtenmasten, Wände aus Kunststoff
- 31: Ausrüstungsset als Maststück, bestehend aus einer Streben- oder Karbon-verstärkten Kunststoffhülle. Folienantenne innen an Außenwand
- 32: Ausrüstungsset
- 33: Kommunikationsnetz
- 34: Stromnetz
- 35: Bodentank für EC Erweiterungen

## Patentansprüche

1. Straßenleuchte, die Folgendes aufweist:
einen Leuchtenmast;
einen Leuchtenkopf, der ein Leuchtmittel der Straßenleuchte aufweist;
Kernkomponenten, wenigstens eine Schnittstelle und wenigstens eine Antenne einer Edge-Computing-Einrichtung; und
ein Ausrüstungsset, welches an dem Leuchtenmast und/oder an dem Leuchtenkopf installiert ist, wobei das Ausrüstungsset einen Geräteraum aufweist, in welchem wenigstens eine Antenne der Edge-Computing-Einrichtung angeordnet ist.

2. Straßenleuchte nach Anspruch 1, wobei der Geräteraum eine Außenwand aufweist, die sich um 360° um den Leuchtenmast und/oder den Leuchtenkopf erstreckt und die Außenwand für elektromagnetische Strahlung transparent ist.

3. Straßenleuchte nach einem der vorhergehenden Ansprüche, wobei das Ausrüstungsset an die Geometrie einer Außenkontur des Leuchtenmasts und/oder des Leuchtenkopfs angepasst ist.

4. Straßenleuchte nach einem der vorhergehenden Ansprüche, wobei das Ausrüstungsset als Mastmanschette um den Leuchtenmast ausgebildet ist.

5. Straßenleuchte nach einem der Ansprüche 1 bis 3, wobei das Ausrüstungsset als Zwischenstück des Leuchtenmasts ausgebildet ist, und insbesondere zwischen einem Ende des Leuchtenmast und einem Ende des Leuchtenkopfs angeordnet ist.

6. Straßenleuchte nach einem der Ansprüche 1 bis 3, wobei das Ausrüstungsset als Aufsatz auf den Leuchtenkopf ausgebildet ist.

7. Straßenleuchte nach einem der Ansprüche 1 bis 3, wobei das Ausrüstungsset als Einschub in den Leuchtenmast oder den Leuchtenkopf ausgebildet ist.

8. Straßenleuchte nach einem der vorhergehenden Ansprüche, wobei die wenigstens eine Antenne mehrere Flächen-und/oder Folienantennen umfasst, die innen liegend an einer Außenwanne des Geräteraums entlang des Umfangs des Leuchtenmasts und/oder des Leuchtenkopfs angeordnet sind.

9. Straßenleuchte nach einem der vorhergehenden Ansprüche, wobei das Ausrüstungsset in einer Höhe zwischen vier und zwölf Meter über dem Boden an dem Leuchtenmast und/oder dem Leuchtenkopf angebracht ist.

10. Straßenleuchte nach einem der vorhergehenden Ansprüche, welche ferner einen Bodentank oder einen bodennahen Schaltschrank aufweist, in welchem Komponenten der Edge-Compuntin-Einrichtung angeordnet sind.

11. Straßenleuchte nach einem der vorhergehend Ansprüche, wobei in dem Ausrüstungsset Komponenten für eine optische Kommunikation, Virtual Light Communication, VLC, angeordnet sind.

12. Straßenleuchte nach einem der vorhergehenden Ansprüche, wobei das Ausrüstungsset Außenwände aufweist, die den Geräteraum gegen Staub, Stöße, Feuchtigkeit, Wind und UV-Strahlung schützen, insbesondere einen Schutz nach IP44 oder höher gewährleisten.

13. Straßenleuchte nach einem der vorhergehenden Ansprüche, wobei das Ausrüstungsset eine Außenwand aufweist, die aus mehreren, vorzugsweise gleich geformten, Schalenelementen besteht, welche den Geräteraum nach außen umschließen.

14. System aus mehreren Straßenleuchten, wobei wenigstens eine der Straßenleuchten als Straßenleuchte nach einem der vorhergehenden Ansprüche ausgeführt ist, sowie weiteren Straßenleuchten, die jeweils Komponenten von Edge-Computing-Einrichtungen aufweisen, wobei die Straßenleuchten über ein Datennetzwerk miteinander verbunden sind und in Verbindung miteinander Rechenleistung für Edge-Computing bereitstellen.
